# EUROPEAN PATENT SPECIFICATION

(11) **EP 0 480 686 B1**
(45) Date of publication and mention of the grant of the patent: **19.01.1994**
(21) Application number: 91309232.6
(22) Date of filing: 08.10.1991
(51) Int. Cl.: F16L 55/175, F16L 55/168, F16L 58/08, F16L 58/14

(54) **Method for reinforcing and repairing equipment details and components subjected to heavy abrasion wear**
Verfahren zur Verstärkung und Reparatur von Einrichtungsdetails und -Bestandteilen bei schwerem Abtriebverschleiss
Méthode pour renforcer et réparer des éléments d'équipement et des composants subissant une forte usure par abrasion

(30) Priority: 08.10.1990 NO 904348
(43) Date of publication of application: 15.04.1992
(73) Proprietor: ELKEM A/S, 0483 Oslo 4 (NO)
(72) Inventor: Johansen, Knut H., N-4616 Kristiansand (NO); Larsen, Oyvind, N-4628 Kristiansand (NO); Schelderup, Hans H., N-4626 Kristiansand (NO)
(74) Representative: Rees, David Christopher

(56) References cited:
- DD-A- 232 461
- DE-A- 3 017 632
- FR-A- 2 246 804
- US-A- 4 176 691

## Description

The present invention relates to a method for reinforcing and repairing equipment details and components subjected to heavy abrasion wear during use.

Abrasion wear is a frequent and costly problem in a variety of industries such as the mining industry, the mineral processing and transportation industries, coal fired power plants and oil and gas production installations.

In all these industries a common problem is abrasion wear caused by solid particles on equipment used for the handling and transportation of such solid particles. The particles may be transported or handled in dry form for example by pneumatic transport or in a liquid slurry form. Normally some parts of this transportation and handling equipment are more subject to abrasion wear than the rest of the equipment.

One typical example would be bends in transportation lines for particles. Whereas the greater part of the transportation line can have lifetime of up to many years, bends in the transportation lines many have a lifetime of just a few weeks. Such transportation lines and other handling equipment must therefore frequently be stopped for maintenance, which normally includes the replacement of bends and other critical components. Thus, maintenance costs are very high and production is lost due to the high downtime of the equipment. Frequent attempts have been made to address this problem by replacing critical parts made from standard material with parts made from more wear resistant materials. This does, of course, somewhat increase the lifetime of the critical parts, but unfortunately the costs for wear resistant materials are very high so the overall costs are not significantly reduced.

There is therefore a need for a simple and low cost method for reinforcing or repairing critical parts which are subjected to high abrasion wear.

It is an object of the present invention to provide a simple low cost method for reinforcing and repairing equipment details and components which are subjected to abrasion wear during use.

Accordingly, the present invention provides a method for reinforcing or repairing equipment details and components subject to abrasion wear, which comprises affixing a casing about the area of the equipment detail or component subject to abrasion wear and casting a wear resistant concrete material into the space between the casing and the equipment detail or component.

Preferably, a ceramic wear resistant material having one surface corresponding to the surface to be repaired or reinforced is temporarily affixed to the equipment detail or the component, whereafter a concrete material is filled into the cavity between the ceramic material and the casing.

The method of the present invention is particularly suitable for reinforcing or repairing parts of transportation lines such as bends and other parts which are subject to abrasion wear by particles transported in the transportation lines.

If the locations which are subject to heavy abrasion wear can be localised during the design of a transportation line or any other equipment, these locations can be reinforced by the method of the present invention during construction of the equipment. The lifetime of the critical parts can thereby be significantly increased from the outset.

In other cases spots or areas on equipment subject to high abrasion wear can be detected after having been in use for some time and can then be repaired by the method according to the present invention. In many cases equipment details and components which normally would have been considered to be completely worn out can be repaired by the method of the present invention.

The invention may be carried into practice in various ways and some embodiments described by way of example with reference to the accompanying drawings, in which:-
Figure 1 is an axial section through a pipe repaired or reinforced according to the method of the present invention;
Figure 2 is a section along the line I-I of figure 1;
Figure 3 is an axial section through a pipe bend repaired or reinforced according to another embodiment of the present invention; and
Figure 4 is a section along the line II-II of figure 3.

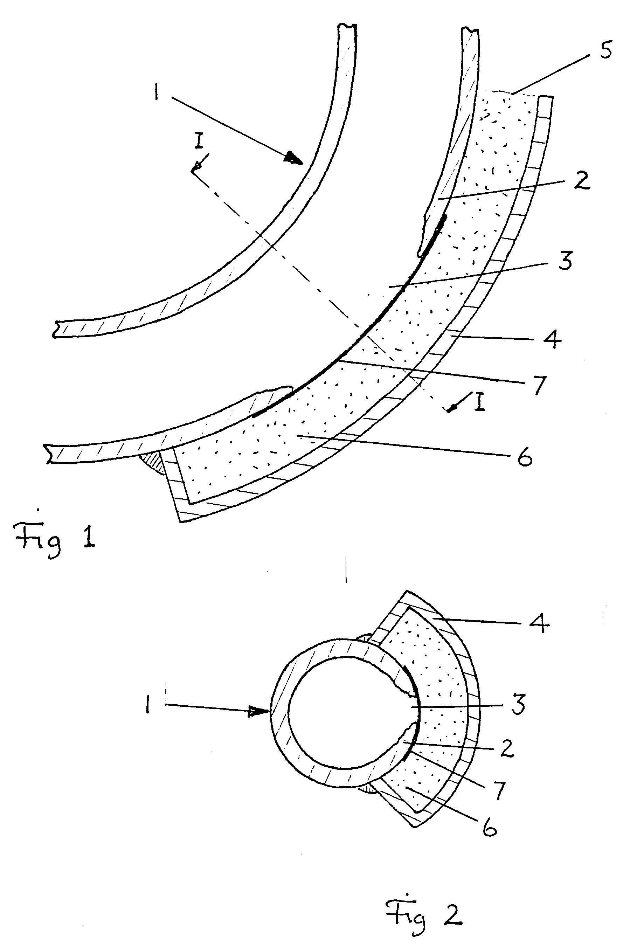

Figures 1 and 2 show a pipe bend 1 made from steel. The pipe bend might for example be a part of a transportation line for transporting particles which cause abrasion wear. After having been used for some time a part of the wall 2 in the pipe bend will be worn and perforated as shown by reference numeral 3.

This worn out bend is repaired by the method of the present invention.

The outside surface of the area wall 2 to be repaired is, if necessary, sand-blasted and cleaned. A casing 4 made from steel plate is welded to the outside of the area of the pipe bend 1 to be repaired. The casing 4 is provided with an opening 5 at its upper end. A wear resistant concrete mixture 6 is made and cast through the opening 5 in the casing 4 and into the cavity between the wall 2 of the pipe bend 1 and the casing 4. If necessary, vibration is used to ensure a voidfree concrete material. After a few hours hardening time in order for the concrete 6 to reach some strength, the pipe bend 1 can again be put into operation.

In most cases this method of repairing can be carried out without demounting the parts to be repaired. The only space required is the space necessary to locate the casing 4 in place.

It should be appreciated that if the pipe bend 1 has large holes, it may be necessary to cover the holes with a thin steel plate 7 or the like in order to prevent the concrete flowing through the holes and into the interior of the pipe bend 1.

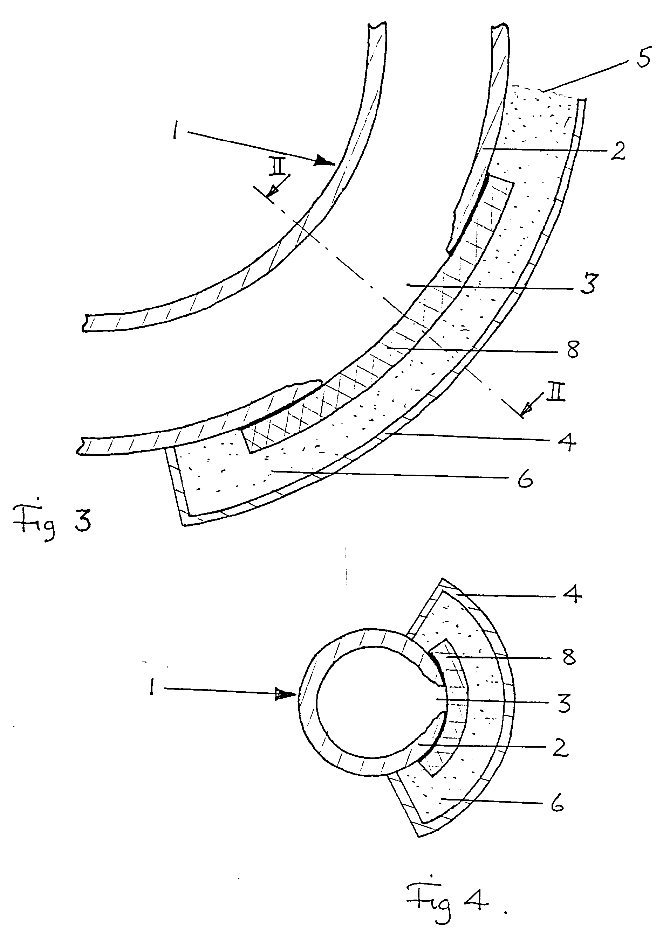

The embodiment show in Figures 3 and 4 only differs from the embodiment of Figures 1 and 2 in that a plate 8 of ceramic abrasion resistant material is placed in contact with the worn out area of the pipe bend 1 before the concrete 6 is cast into the casing 4. In order to keep the ceramic plate 8 in place before the casing 4 is located and the concrete 6 is supplied, the ceramic plate 8 is affixed to the wall 2 of the pipe bend 1 by means of for example glue or some other affixing means.

By using this method, a surprisingly high abrasion wear protection is obtained at a very low cost, as the ceramic material is only used in those specific areas which are subject to high abrasion wear.

The invention will now be further illustrated in the following examples.

### Example 1

In a transport line for dry nepheline syenite particles, the bends had to be replaced about every 6 months due to perforations caused by the abrasion wear caused by the nepheline syenite particles. The transport line was made from steel pipes of 60 mm diameter and included two bends with a radius of 500 and 580 mm,

The two bends were repaired using the method of the present invention in the way described above in connection with Figures 1 and 2. A super concrete with SiC filler was cast into a casing made from 3 mm steel plates. Two years after the repair there were still no signs of any perforations or any abnormalities in the bends repaired by the method of the present invention. Thus, the lifetime of the bends has been increased by at least four times.

### Example 2

The method according to the present invention was used for repairing a bend on a vacuum cleaning line used for collecting dust from a lathing operation in the production of large carbon electrodes. A total of 5 bends made from steel plate pipe having a diameter of 60 mm and a wall thickness of 3mm were repaired according to the method of the present invention. The bend radii were up to 1200 mm. The installed repair lengths were up to 800 mm. Normal operational life of the steel bends was typically 2 weeks. The corresponding operation life of the bends after having been repaired according to the method of the present invention using a concrete containing SiC as a filler cast into a casing made from steel plate of 3 mm thickness drastically increased. In fact, the bends repaired in this way were still in operation after 5 months, giving an increase in lifetime of at least 10 times.

### Example 3

Some of the bends in the vacuum cleaning line described in Example 2 were repaired in the same way as Example 2 except that a siliconised silicon carbide wear plate of 8 mm thickness was located in contact with the wall of the bend before the casing was mounted and the concrete was cast into the casing. These bends were still in operation after six months and very little wear was observed. It is therefore expected that the bends will have a lifetime between 1 and 2 years.

## Claims

1. A method for reinforcing or repairing equipment details and components (1) which are subjected to abrasion wear, characterised by affixing a casing (4) about the area (3) of the equipment detail or component (1) subject to abrasion wear and casting a wear resistant concrete material (6) into the space between the casing (4) and the surface of the equipment detail or the component (1).

2. A method as claimed in Claim 1, characterised in that a plate (8) of ceramic wear resistant material having one surface corresponding to the surface to be repaired, is affixed to the equipment detail or the component (1) before the casing (4) is located and the concrete (6) is cast.

3. A method as claimed in Claim 2, characterised in that the plate (8) is of siliconised silicon carbide.

4. A method as claimed in Claim 1, characterised in that a thin metal sheet (7) preferably of steel is affixed to the surface to be repaired before the casing (4) is located and the concrete (6) is cast.

5. A method as claimed in any preceding Claim, characterised in that the concrete (6) used is a super concrete including a filler of SiC.

## Patentansprüche

1. Verfahren zur Verstärkung oder Reparatur von Einrichtungsdetails und -bestandteilen (1), die einem Abriebverschleiß ausgesetzt sind, gekennzeichnet durch Befestigen einer Ummantelung (4) um den dem Abriebverschleiß ausgesetzten Bereich (3) des Einrichtungsdetails oder -bestandteils (1) und Eingießen eines abriebfesten Betonmaterials (6) in den Raum zwischen der Ummantelung (4) und der Oberfläche des Einrichtungsdetails oder -bestandteils (1).

2. Verfahren nach Anspruch 1, dadurch gekennzeichnet, daß an dem Einrichtungsdetail oder -bestandteil (1) eine Platte (8) aus keramischem, abriebfestem Werkstoff, deren eine Oberfläche der zu reparierenden Oberfläche entspricht, befestigt wird, bevor die Ummantelung (4) angeordnet und der Beton (6) eingegossen wird.

3. Verfahren nach Anspruch 2, dadurch gekennzeichnet, daß die Platte (8) aus siliziertem Siliciumcarbid besteht.

4. Verfahren nach Anspruch 1, dadurch gekennzeichnet, daß eine dünne Metallplatte (7), vorzugsweise aus Stahl, an der zu reparierenden Oberfläche befestigt wird, bevor die Ummantelung (4) angeordnet und der Beton (6) eingegossen wird.

5. Verfahren nach einem der Ansprüche 1 bis 4, dadurch gekennzeichnet, daß der verwendete Beton (6) ein einen Füllstoff aus SiC enthaltender Superbeton ist.

## Revendications

1. Procédé pour renforcer ou réparer des éléments d'équipement et des composants (1) soumis à une forte usure par abrasion, caractérisé en ce qu'il consiste à fixer un coffrage (4) autour de la zone (3) de l'élément d'équipement ou du composant (1) qui se trouve soumise à l'usure par abrasion, et à couler un matériau de béton résistant à l'usure (6) dans l'espace compris entre le coffrage (4) et la surface de l'élément d'équipement ou du composant (1).

2. Procédé selon la revendication 1, caractérisé en ce qu'une plaque (8) d'un matériau de céramique résistant à l'usure, présentant une surface correspondant à la surface à réparer, est fixée à l'élément d'équipement ou au composant (1) avant de mettre en place le coffrage (4) et de couler le béton (6).

3. Procédé selon la revendication 2, caractérisé en ce que la plaque (8) est en carbure de silicium siliconé.

4. Procédé selon la revendication 1, caractérisé en ce qu'une feuille de métal mince (7), de préférence en acier, est fixée à la surface à réparer avant de mettre en place le coffrage (4) et de couler le béton (6).

5. Procédé selon l'une quelconque des revendications précédentes, caractérisé en ce que le béton (6) utilisé est un béton supérieur chargé de SiC.
